**Europäisches Patentamt**

**European Patent Office**

**Office européen des brevets**

(19)

(11) Veröffentlichungsnummer: **0 054 122**
**B1**

(12) # EUROPÄISCHE PATENTSCHRIFT

(45) Veröffentlichungstag der Patentschrift:
20.03.85

(51) Int. Cl.⁴: **A 23 L 2/38**

(21) Anmeldenummer: **81108354.2**

(22) Anmeldetag: **15.10.81**

(54) **Verfahren zur Herstellung eines diätätischen Getränkes sowie ein insbesondere nach diesem Verfahren hergestelltes Getränk.**

(30) Priorität: **12.12.80 DE 3046773**

(43) Veröffentlichungstag der Anmeldung:
**23.06.82 Patentblatt 82/25**

(45) Bekanntmachung des Hinweises auf die Patenterteilung:
**20.03.85 Patentblatt 85/12**

(84) Benannte Vertragsstaaten:
**AT BE CH DE FR GB IT LI LU NL SE**

(56) Entgegenhaltungen:
**GB - A - 2 057 846**

**MICROBIOLOGY ABSTRACTS, Band 8, Nr. 7, Juli 1973, Seite 12, Nr. 8A4681 London, G.B. "Plans for expanding the production of kvass in Poland"**
**CHEMICAL ABSTRACTS, Band 77, 1972, Seite 354, Nr. 3753y Columbus, Ohio, U.S.A. F. TOMCZYK: "Technological problems in the production of bread kvass"**
**CHEMICAL ABSTRACTS, Band 71, 1969, Seite 234, Nr. 48271g Columbus, Ohio, U.S.A. E. LUECK: "Kvass"**

**Die Akte enthält technische Angaben, die nach dem Eingang der Anmeldung eingereicht wurden und die nicht in dieser Patentschrift enthalten sind.**

(73) Patentinhaber: **Kanne, Wilhelm, sen., Im Geistwinkel 40, D-4670 Lünen (DE)**

(72) Erfinder: **Kanne, Wilhelm, sen., Im Geistwinkel 40, D-4670 Lünen (DE)**

(74) Vertreter: **Patentanwälte Meinke und Dabringhaus Dipl.-Ing. J. Meinke Dipl.-Ing. W. Dabringhaus, Westenhellweg 67, D-4600 Dortmund 1 (DE)**

## Beschreibung

Die Erfindung richtet sich auf ein Verfahren zur Herstellung eines diätetischen Getränkes auf der Basis von Milchsäure unter Einsatz von Brot sowie auf ein diätetisches Getränk auf der Basis von Milchsäure.

Diätetische Getränke sind in grosser Vielfalt bekannt. Sie werden nach sehr unterschiedlichen Verfahrensweisen aus einer Vielzahl von Grundprodukten hergestellt. Es kann sich um zuckerfreie Säfte, Moste, Weine o. dgl. handeln, die aus kohlenhydrathaltigen Grundprodukten oder aber unter Verwendung von Obst, Kräutern, Gemüsen u. dgl. hergestellt werden.

Insbesondere aus Osteuropa ist unter der Bezeichnung «Kwass» ein Volksgetränk bekannt, welches durch eine gemischte Milchsäure und alkoholische Gärung eines wässrigen Extraktes aus Vollkornbrot erhalten werden kann. Die Vergärung kann mit Mehlsorten, Malz oder anderen Stoffen, mit und ohne Zusatz von Zucker, erfolgen. Die Gärdauer ist dabei vergleichweise gering. Sie liegt zwischen 14 und 16 Stunden bei einer Temperatur von 30 Grad. Anschliessend wird mit Zuckersirup gesüsst (Rehn, Industrielle Mikrobiologie, Springer-Verlag, 1980, Seite 597).

Aufgabe der Erfindung ist die Schaffung einer Lösung, mit der ein diätetisches Getränk ohne jeglichen Zusatz von Fremdprodukten auf der Basis von Milchsäure hergestellt wird.

Bei einem Verfahren der eingangs bezeichneten Art wird diese Aufgabe gemäss der Erfindung dadurch gelöst, dass Sauerteigbrot im Natursauerverfahren unter Einsatz von Getreide aus biologisch-dynamischen Anbauten ohne chemische Pflanzen- und Lagerschutzmittel hergestellt und das so hergestellte Sauerteigbrot mit Wasser versetzt einer spontanen Säuerung unterworfen und danach die so gewonnene Flüssigkeit abgezogen wird.

Durch die Verwendung von Sauerteigbrot als der Säuerung unterliegendes Gärprodukt wird gewährleistet, dass das Getränk besonders verträglich ist. Um die Spontansäuerung hervorzurufen, ist es allerdings notwendig, dass die Grundprodukte möglichst rein sind, so darf das Getreide nicht mit Pflanzenschutzmittel behandelt worden sein u. dgl. mehr.

Seit langem werden von den interessierten Kreisen Bemühungen dahingehend unternommen, möglichst viele der im Markt befindlichen Lebensmittel und Getränke aus möglichst reinen Grundstoffen herzustellen, um die in der Literatur unbestrittene, mögliche Schädigung durch synthetische Zusatzstoffe auf den menschlichen Organismus so weit als möglich zu vermeiden. Diesem Gedanken trägt die Erfindung dadurch Rechnung, dass vergleichsweise dem bayrischen Reinheitsgebot bei der Bierherstellung, nur Grundprodukte zur Erzeugung des Getränkes herangezogen werden, die als naturrein bezeichnet werden.

Nach der Erfindung ist auch vorgesehen, den für den Verkauf bestimmten Gefässen vor dem Verschliessen eine geringe Anzahl von ungespritzten Rosinen zuzusetzen. Der Zusatz dieser Rosinen kann bewirken, dass ein geringfügiger Anteil an natürlicher Kohlensäure während der Lagerzeit bis zum Endverbrauch entsteht, wodurch sich eine natürliche Konservierung ergibt.

Die Erfindung richtet sich auch auf ein diätetisches Getränk auf der Basis von Milchsäure, welches sich dadurch auszeichnet, dass es aus der Versetzung von Sauerteigbrot mit Wasser durch spontane Säuerung hergestellt ist, wobei das Sauerteigbrot aus im Natursauerverfahren hergestelltem Teig mit Mehl aus biologisch-dynamischen Anbauten stammenden Getreiden gebakken ist.

Weitere Merkmale eines solchen Getränkes bestehen darin, dass der enthaltene Anteil an L (+)−Milchsäure im Bereich von wenigstens 50% liegt und/oder dass der Alkoholgehalt im Bereich unter 0,2% im fertigen Produkt liegt.

In der nachfolgenden Tabelle ist das Verhältnis der Gesamtmilchsäure in Prozent, der Anteil an L (+)−Milchsäure, die pH-Werte sowie der Alkoholgehalt von zwölf willkürlich gezogenen Proben aus unterschiedlichen Produktionsprozessen angegeben, wobei bei den mit − bezeichneten Alkoholgehalten diese bei den entsprechenden Proben nicht untersucht wurden.

|  | Gesamt-milchsäure % | % L(+)−Milchsäure | pH-Wert | Alkohol |
|---|---|---|---|---|
| F1.1 | 0,81 | 53 | 3,01 | − |
| F1.2 | 0,94 | 54 | 2,95 | − |
| F1.3 | 1,00 | 53 | 2,95 | − |
| F1.4 | 1,02 | 52 | 2,95 | − |
| F1.5 | 0,97 | 51 | 2,98 | 0,08 |
| F1.6 | 0,89 | 52 | 3,02 | − |
| F1.7 | 0,89 | 53 | 3,00 | − |
| F1.8 | 1,04 | 54 | 2,98 | 0,12 |
| F1.9 | 1,04 | 58 | 2,99 | − |
| F1.10 | 0,73 | 50 | 3,08 | 0,16 |
| F1.11 | 0,60 | 51 | 3,09 | 0,15 |
| F1.12 | 0,89 | 52 | 2,98 | 0,08 |

Natürlich ist das beschriebene Verfahren nicht auf die Verwendung eines bestimmten Getreides beschränkt. Hier können sauerteige Brote unterschiedlicher Getreidearten herangezogen werden. Die Verweilzeiten können je nach Anforderungen an das Endprodukt unterschiedlich lange sein. Statt der Zugabe von Rosinen können auch andere Beerenfrüchte verwendet werden, die ggf. dem Produkt gewisse Geschmacksnuancen geben.

## Patentansprüche

1. Verfahren zur Herstellung eines diätetischen Getränkes auf der Basis von Milchsäure unter Einsatz von Brot, dadurch gekennzeichnet, dass Sauerteigbrot im Natursauerverfahren unter Einsatz von Getreide aus biologisch-dynamischen Anbauten ohne chemische Pflanzen- und Lagerschutzmittel hergestellt und das so hergestellte Sauerteigbrot mit Wasser versetzt einer spontanen Säuerung unterworfen und danach die so gewonnene Flüssigkeit abgezogen wird.

2. Verfahren nach Anspruch 1, dadurch gekennzeichnet, dass den für den Verkauf bestimmten Gefässen vor dem Verschliessen eine geringe Anzahl an ungespritzten Rosinen zugesetzt werden.

3. Diätetisches Getränk auf der Basis von Milchsäure, dadurch gekennzeichnet, dass es aus der Versetzung von Sauerteigbrot mit Wasser durch spontane Säuerung hergestellt ist, wobei das Sauerteigbrot aus im Natursauerverfahren hergestelltem Teig mit Mehl aus biologisch-dynamischen Anbauten stammenden Getreiden gebacken ist.

4. Diätetisches Getränk nach Anspruch 3, dadurch gekennzeichnet, dass der enthaltene Anteil an L (+)-Milchsäure im Bereich von wenigstens 50% liegt.

5. Diätetisches Getränk nach Anspruch 3 oder 4, dadurch gekennzeichnet, dass der Alkoholgehalt im Bereich unter 0,2% im fertigen Produkt liegt.

## Revendications

1. Procédé de préparation d'une boisson diététique à base d'acide lactique par utilisation de pain, caractérisé en ce que l'on prépare du pain de pâte acide par le procédé d'acidification naturelle un utilisant des céréales de cultures biologiques-dynamiques sans produits phytosanitaires ni conservateurs chimiques, et en soumettant le pain de pâte acide ainsi préparé, après addition d'eau, à une acidification spontanée, puis en soutirant le liquide obtenu.

2. Procédé selon la revendication 1, caractérisé en ce que l'on ajoute aux récipients prévus pour la vente, avant la fermeture, un petit nombre de raisins secs non éclatés.

3. Boisson diététique à base d'acide lactique, caractérisée en ce qu'elle a été préparée par addition d'eau à du pain de pâte acide et acidification naturelle, le pain de pâte acide ayant été cuit à partir d'une pâte préparée par le procédé d'acidification naturelle avec de la farine de céréales provenant de cultures biologiques-dynamiques.

4. Boisson diététique selon la revendication 3, caractérisée en ce qu'elle contient au moins 50% d'acide L-(+)-lactique.

5. Boisson diététique selon la revendication 3 ou 4, caractérisée en ce qu'elle contient moins de 0,2% d'alcool dans le produit fini.

## Claims

1. A process for the production of a diet drink based on lactic acid using bread characterized in that leaven bread is produced in a natural leavening process using grain from biological-dynamic units without chemical plant protection and storage protection agents, and the leaven bread produced in that way, mixed with water, is subjected to spontaneous leavening, and thereafter the liquid obtained in that manner is drawn off.

2. A process according to claim 1 characterized in that a small number of unsprayed raisins are added to the vessels which are for sale, before closure.

3. A diet drink based on lactic acid characterized in that it is produced from mixing leaven bread with water by spontaneous leavening, wherein the leaven bread is baked from dough produced in the natural leavening process with flour from grain originating from biological-dynamic units.

4. A diet drink according to claim 3 characterized in that the proportion of L (+)-lactic acid produced is in the region of at least 50%.

5. A diet drink according to claims 3 or claim 4 characterized in that the alcohol content is in the region of below 0.2% in the finished product.